# EUROPEAN PATENT APPLICATION

(11) **EP 4 826 263 A1**
(43) Date of publication of application: **21.10.2026**
(21) Application number: 25171433.3
(22) Date of filing: 17.04.2025
(51) Int. Cl.: F16B 5/02, F16B 39/284

(54) **FASTENER FOR ATTACHING A STRUCTURAL COMPONENT TO A CARRIER STRUCTURE**

(71) Applicant: Newfrey LLC, New Britain, CT 06053 (US)
(72) Inventor: Albach, Jens, 35394 Gießen (DE); Rosemann, Frank, 35394 Gießen (DE); Brumm, Mathias, 35394 Gießen (DE)
(74) Representative: Haarpatent Patentanwälte Krämer Meyer

(57) **Abstract**

A fastener (1) for attaching a structural component (20) to a carrier structure is described, comprising an inner part (2) and an outer part (3), wherein the inner part (2) comprises a receptacle (6) along a longitudinal axis for reversibly receiving a holding element (19) via a first end (4) of the inner part (2). The inner part (2) comprises an external thread (10) on its outer surface (9), at least partially, wherein the inner part (2) comprises at least one radially resiliently mounted locking element (12), which is located at least in sections in the area of the external thread (10) and at least partially projects radially beyond the outer surface (9) of the inner part (2). The outer part (3) is designed to be sleeve-shaped and comprises on its inner surface (15) at least one engaging element (16) projecting radially to the center axis of the outer part (3) and at least one recess (18). The engaging element (16) is adapted for engagement with the external thread (10) of the inner part (2), so that the inner part (2) can be guided axially and helically relative to the outer part (3) or the outer part (3) can be guided axially and helically relative to the inner part (2) until the locking element (12) engages in the recess (18) and the parts (2, 3) are secured against unintentional twisting and loosening.

## Description

The invention concerns a fastener for attaching a structural component to a carrier structure, with an inner part and an outer part, whereby the parts are axially adjustable relative to each other. Furthermore, the invention concerns a system and a method.

A fastener is generally used to secure and position structural components, particularly in industrial and automotive applications. These fasteners enable components to be securely and firmly affixed to a supporting structure, wherein they are often designed to allow a certain adjustability or tolerance compensation. One example of this is the fastening of a door panel of a motor vehicle to the body.

Known fasteners utilize different mounting mechanisms, including snap-fit connections or special adjustment elements. However, in many cases, the adaptability of these systems is limited or requires extensive readjustment.

The known fasteners can be divided into different categories. DE 43 30 102 C2 describes a connection between a body part of a motor vehicle and a door panel. An upper part comprises locking ribs that engage with corresponding locking ribs on a holding element, so that a connection can be produced that can be positioned axially to a certain extent in different positions. A similar construction is known from DE 100 53 200 C2, in which the distance between two parts can also be adjusted using a snap-in connection.

DE 10 2017 128 890 A1 refers to a fastening system for vehicle lights with a threaded sleeve with an external thread that integrates a one-piece adjustment element and allows a rotational movement around the sleeve axis, so that an axial adjustability in the longitudinal direction of the threaded sleeve is possible. A fastening device in which parts are screwed together using a screw cap is also known from DE 10 2011 104 386 A1.

Another height adjustment concept is described in CN 113561910 B, where the height can be adjusted by changing the mounting position. While this method allows for height adjustment, it is not infinitely variable or finely adjustable. Similarly, EP 2 217 469 B1 discloses a three-dimensional adjustment capability, but it requires a more complex mechanism with multiple fasteners.

The known fasteners comprise several disadvantages that complicate their application in certain areas. The systems with locking mechanisms allow no or only a limited height adjustment, which limits the flexibility in the adjustment. Threaded connections often require additional tools for adjustment, which increases the installation effort and complicates the handling. In addition, some systems only offer multi-stage height adjustment via fixed mounting positions, which prevents precise fine adjustment and can lead to stability problems. Other solutions with complex adjustment mechanisms offer three-dimensional adjustment, but their elaborate design with multiple fasteners results in high manufacturing costs and complicates assembly. None of the known systems allows for axial displacement and easy fixation of it.

The object of the invention is to provide a fastener that allows for simple, stepless or finely adjustable height adjustment.

The problem is solved by the features of claim 1 and those of claim 2. Preferred embodiments are described in the dependent claims.

The problem is solved by providing a fastener for attaching a structural component to a support structure, with an inner part comprising a receptacle along a longitudinal axis for reversibly receiving a holding element via a first end of the inner part. The inner part is provided on its outer surface, at least partially, with an external thread and comprises at least one radially resiliently mounted locking element, which is located at least in sections in the area of the external thread and at least partially projects radially beyond the outer surface of the inner part. Furthermore, the fastener comprises a sleeve-shaped outer part that comprises at least one engaging element on its inner surface that extends radially to the center axis of the outer part, as well as at least one recess. The engaging element is adapted for engagement with the external thread of the inner part, so that the inner part can be guided axially and helically relative to the outer part or the outer part relative to the inner part until the locking element engages in the recess and the parts are secured against unintentional twisting and loosening.

This design provides a form-fitting securement of the inner part, which does not require additional fixing means such as screws or clamps. The resilient locking element allows reversible assembly, facilitating disassembly and reuse of the fastener. The helical guidance of the outer part along the external thread ensures a controlled application of force, thus achieving a smooth and low-friction assembly. At the same time, the latching into the recess ensures reliable axial fixing of the parts. The robust design makes the fastener resistant to external influences such as vibrations or temperature fluctuations. Due to its simple design, the fastener is suitable for a wide range of applications, particularly in automotive engineering. In the sense of the invention, the term "parts" includes the inner part and the outer part.

Furthermore, the invention proposes a fastener for attaching a structural component to a support structure, which includes an inner part and an outer part. The inner part comprises a receptacle along a longitudinal axis for the reversible reception of a holding element over a first end of the inner part. At least one engaging element and at least one recess are provided on its outer surface, projecting radially away from the center axis of the inner part. The outer part is sleeve-shaped and has an internal thread, at least in some areas. Furthermore, at least one radially resiliently mounted locking element is arranged on the outer part, which is located at least in sections in the area of the internal thread and at least partially projects radially beyond the inner surface of the outer part. The engaging element of the inner part is adapted for engagement with the internal thread of the outer part, so that the inner part can be guided axially and helically relative to the outer part or the outer part relative to the inner part until the locking element engages in the recess and the parts are secured against unintentional twisting and loosening.

This design enables a compact and space-saving mounting solution, since the internal thread is integrated directly into the outer part. This allows the thread to be optimally adapted to the locking mechanism, ensuring a particularly precise and firmly height adjustment. In addition, the resiliently mounted locking element ensures reliable fixing after adjustment by automatically locking into the recess of the inner part. This prevents unintentional adjustment or loosening. The screw-shaped guide enables controlled and even adjustment. The combination of thread and locking mechanism ensures a self-locking effect that permanently secures the set position. These features make the fastener particularly suitable for applications with limited space where a firmly fixed yet easily adjustable mounting solution is required.

In one embodiment, the at least one locking element is positioned in an aperture in a wall of the outer part or the inner part. The inner part and/or the outer part can be designed in particular to be hollow cylindrical, so that the aperture is in the form of a bore or an elongated opening in the wall. It is advantageously provided that the locking element comprises a fixed end and a radially resilient free end that is adapted to engage in a recess. In the embodiment with at least one free end, the locking element extends into this aperture, wherein an opposite end can be fixed to the wall. This arrangement allows the locking element to enter a predetermined locking position when the inner part is twisted or pushed axially relative to the outer part, by latching into an associated recess in the other part. This allows a defined fixing of the two parts relative to each other, without the need for additional clamping or external holding elements.

It is preferred that the free end of the locking element comprises a spherical segment-shaped abutment element. This abutment element can serve to guide the locking element into a specific locking position or to allow a defined abutment on a boundary surface in the outer part or inner part. The spherical segment design can achieve improved guidance and optimized engagement in an associated recess. Advantageously, the locking element can be designed in the form of a plate or bar, wherein the free end is thickened or reinforced. The shape of the free end can be adapted to the shape of the recess. A polygonal shape can also be advantageous. The locking element is preferably manufactured in one piece with the outer part or inner part.

Furthermore, it is preferred that the fastener comprises a plurality of locking elements. These can be distributed evenly or asymmetrically around the circumference of the inner part or outer part and enable improved fixation and load distribution. Multiple locking elements can help to generate a higher holding force and ensure a defined positioning of the inner part relative to the outer part at several locking points. The locking elements are advantageously arranged in such a way that they enable a uniform application of force and reduce local load peaks on individual elements. The locking elements can be resiliently mounted and comprise various cross-sectional shapes to enable optimal adaptation to the latching structure of the respective recess.

In one embodiment, the at least one engaging element is advantageously adapted in the shape of a segment of a circle in the circumferential direction of the outer surface of the inner part or the inner surface of the outer part. This shape can be used to enable the engaging element to be placed over a large area on a corresponding thread structure, thereby ensuring that force is applied firmly and evenly. Advantageously, the width or curvature of the engaging element can be adapted to the geometry of the corresponding thread in order to achieve improved stability of the connection. Alternatively, the engaging element can also be designed in several parts or provided with an elastic component in order to enable a defined flexibility. Furthermore, it can be advantageous to design the engaging element in the form of a plate. The engaging element is particularly located in a plane that extends transversely to the longitudinal axis of the part.

It is advantageous if the fastener comprises several engaging elements that are axially spaced from each other along the longitudinal axis of the inner part or outer part. This design allows for multi-stage engagement, enabling more precise height adjustment of the inner part relative to the outer part. The axial staggering of the engaging elements can achieve a defined engagement with several thread grooves of a thread. The distances between the engaging elements can be advantageously designed to be variable in order to enable a graduated or stepless adjustment. The engaging elements can also vary in their shape or size in order to achieve a targeted adjustment of the engaging force. Alternatively, an elastic or spring-loaded mounting can be provided to realize a damped or self-adjusting locking mechanism.

In a favorable embodiment, the fastener includes a plurality of axially spaced apart engaging elements forming an engaging arrangement, wherein a plurality of engaging arrangements are circumferentially spaced along the inner surface of the outer member or the outer surface of the inner member. This design allows the locking arrangements to enable a variety of locking positions along the longitudinal axis of the Fastener, whereby precise height adjustment can be realized. The distribution of the locking arrangements in the circumferential direction can also improve the stability of the locking connection and ensure a uniform transmission of force. Advantageously, the engaging arrangements can be arranged at defined distances from one another in order to achieve a systematic gradation of the engaging positions. Alternatively, a non-uniform distribution of the engaging arrangements can be provided in order to enable targeted adaptation to different load requirements. The engaging arrangements can also be combined with elastic or springy elements in order to achieve a damped or self-adjusting engagement.

It is preferred that the Fastener comprises recesses between the engaging arrangements. These recesses can serve to enable defined guidance of the engaging elements and to facilitate engagement in a predetermined position. The positioning of the recesses, in particular the distances between the recesses, can be used to precisely adjust the torsion, since the engaging elements lock into clearly defined areas, thus ensuring that the selected position is securely locked. The recesses can be advantageously dimensioned to enable a form-fitting receptacle for the engaging elements, thus improving the axial fixation of the inner part relative to the outer part. Alternatively, the recesses can also serve as free spaces for the receptacle of elastic or springy elements, whereby a damped or self-adjusting latching mechanism can be realized.

The fastener is used in particular to attach a structural component to a carrier structure. The carrier structure may be, for example, a vehicle body. The structural component is in particular a component that is to be attached to the body, for example a door panel or a part thereof. In this sense, it is advantageous if the outer part comprises fastening elements that serve to fasten a structural component. These fastening elements can be an integral part of the outer part or can be designed as separate elements. Advantageously, the fastening elements can be designed in the form of threaded holes, plug-in connections, latching structures or clamping devices that are present in or on the outer part and enter into a connection, in particular a form-fitting or force-fitting connection, with a corresponding connection partner on the structural component in order to enable flexible and application-optimized assembly. Alternatively, the fastening elements can be adapted as elastic or springy elements in order to realize a vibration-damping or compensating fastening of the structural component.

It is preferred that the fastener is made of a single piece of plastic, wherein both the inner and outer parts can each be a single piece of plastic. The single-piece production of plastic enables cost-efficient manufacturing, especially by injection molding, and reduces the number of individual parts and the assembly effort. The choice of material can also be used to specifically influence specific properties, such as high wear resistance, reduced friction or a defined elasticity of the parts. Alternatively, multi-component manufacturing can be considered to combine different material properties in one part, for example for increased resistance to mechanical stress or for improved vibration damping.

It is advantageously provided that retaining elements are present in the receptacle of the inner part, which serve to hold the holding element and project radially resiliently into the receptacle. The retaining elements can be designed in the form of locking fingers, elastic lamellae or resilient retaining elements, which securely fix the retaining means in the receptacle. The resilient mounting allows the retaining element to be held without play, ensuring a reliable connection and preventing unintentional loosening. Advantageously, the retaining element holding elements can be designed to require a defined insertion force and to allow easy assembly and disassembly. Alternatively, the geometry of the retaining elements can be adapted to different retaining means so that different designs and diameters can be accommodated. This enables universal use of the Fastener for different applications and component variants. The retaining means can be, for example, a stud or the like that is installed on a sheet metal part, in particular a body part of a vehicle.

The inner part or the outer part can be rotated manually or automatically. In one embodiment, the receptacle of the inner part is provided with engagement elements for a tool by means of which the inner part can be rotated relative to the outer part. These engagement elements can be designed as profiled notches, internal gears, hexagonal or polygonal receptacles that allow a form-fitting transmission of force between the tool and the inner part. This design allows the inner part to be twisted precisely and in a controlled manner to achieve the desired height adjustment or locking. The engagement elements are advantageously designed to ensure safe handling with common tools, for example with a screwdriver, a socket wrench or a special adjustment tool. Alternatively, the engagement means can also be designed as grip structures or knurls to allow tool-free adjustment by hand. This design facilitates assembly and allows for flexible adaptation of the fastener to different operating conditions.

The invention also relates to a system for attaching a structural component to a carrier structure, comprising a fastener, especially as described before, having an inner part and an outer part. The structural component is attached to the outer part in a torque-transmitting and reversible manner, while the inner part enables reversible attachment to the carrier structure. For this purpose, the inner part comprises a receptacle aligned along a longitudinal axis, into which a holding element can be inserted that is connected to the carrier structure. The holding element is held in position in the receptacle by for example retaining elements, in particular radially projecting retaining elements. This allows a tool-free, detachable connection between the fastener and the carrier structure, while at the same time securely fixing the holding element in the inner part.

For the purpose of adjusting the height of the structural component relative to the carrier structure, the fastener is equipped with a threaded locking mechanism that is provided in two alternative forms. In the first variant, the inner part comprises an external thread on its outer surface, and the outer part comprises on its inner surface at least one engaging element that extends radially to the center axis and is designed for engagement with the external thread. Alternatively, the outer part can comprise an internal thread, wherein at least one engaging element is arranged on the outer surface of the inner part, which projects radially away from the center axis and serves to engage with the internal thread. These alternative arrangements allow for flexible adaptation of the system to different structural conditions and enable universal use of the same functional principle with different geometric designs.

To secure the set position, either the inner part or the outer part has at least one radially resiliently mounted locking element located in the area of the respective thread and protruding beyond the associated surface. The other part comprises at least one corresponding recess into which the locking element engages when a defined relative position is reached. This locking mechanism is positive and reliably prevents unintentional relative movement between the inner and outer parts, for example as a result of vibrations, shocks or dynamic loading.

The inner and outer parts can be guided axially and helically relative to each other, so that the distance between the structural component attached to the outer part and the carrier structure can be adjusted in a targeted manner. This constructive embodiment would like to achieve a precise height or positional adjustment of the structural component along the longitudinal axis of the fastener. The thread engagement causes a finely adjustable movement, while the resilient locking element secures the set position.

It is preferred that the system further comprises a tool that is configured to cooperate with the inner part of the fastener. The tool comprises at least one gripping element at its free end, which is designed to be inserted into a second end of the inner part, opposite the first end. Within this second end, the gripping element can engage with the engagement means provided in the receptacle of the inner part. This engagement enables a rotational movement of the tool to be transmitted to the inner part, allowing the inner part to be rotated relative to the outer part of the fastener.

The engagement means and the gripping element are preferably designed to interact in a form-fitting (interlocking) manner, ensuring precise and reliable torque transmission. The gripping element may be configured as a polygonal profile, an internal toothing, a slotted or cross recess, or another defined profile geometry adapted to the engagement means of the inner part.

Alternatively, the tool can be equipped with a torque-limiting mechanism, which allows for controlled adjustment of the system while preventing overloading or damage to the locking and positioning mechanism of the fastener. This makes the tool a suitable and reliable auxiliary device for safe and precise adjustment of the system during installation or service operations.

The invention also refers to a method for positioning and fixing a structural component relative to a carrier structure using a fastener, especially as described before, that includes an inner part and an outer part. The outer part is connected to the structural component, while the inner part is connected to the carrier structure. A holding element is connected to the carrier structure and is introduced in a receptacle of the inner part that is aligned with a longitudinal axis of the inner part. The retaining element can for example be held in the receptacle by locking fingers or other retaining elements that preferably have a radial spring effect and project into the receptacle, thereby creating a detachable, frictional or form-fitting connection.

The outer part is guided relative to the inner part, or the inner part relative to the outer part, in a helical movement along a threaded connection. This relative movement changes the distance between the structural component and the carrier structure in a targeted manner. When the desired position is reached, a spring-loaded locking element, located either in the inner or outer part, engages in a corresponding recess in the other part. This form-fit locking mechanism prevents unintentional relative movement between the inner and outer parts and reliably fixes the set position.

The technical advantages of the method include the simple and tool-free height adjustment of the structural component relative to the carrier structure. The combination of threaded connection and spring-loaded locking element enables secure locking in a defined position without the need for additional fixing elements. The position can be released and readjusted as required.

The invention will be explained in more detail below with reference to an embodiment of the invention, which is illustrated in the drawings.
- Figure 1: shows a perspective view of an advantageous fastener,
- Figure 2: shows a perspective side view of an embodiment of the inner part,
- Figure 3: shows a perspective plan view of an embodiment of the inner part,
- Figure 4: shows a perspective plan view of an embodiment of an external part,
- Figure 5: shows a sectional view of a module fastener on a holding element,
- Figure 6: shows a perspective view of a tool,
- Figure 7: shows a perspective view of an advantageous arrangement with a tool and a fastener,
- Figure 8: shows a perspective side view of an embodiment of the inner part having engaging element on its outer surface,
- Figure 9: shows a perspective side view of an embodiment of the outer part with an internal thread and
- Figure 10: shows a perspective view of a preferred system with a tool inserted into the inner part.

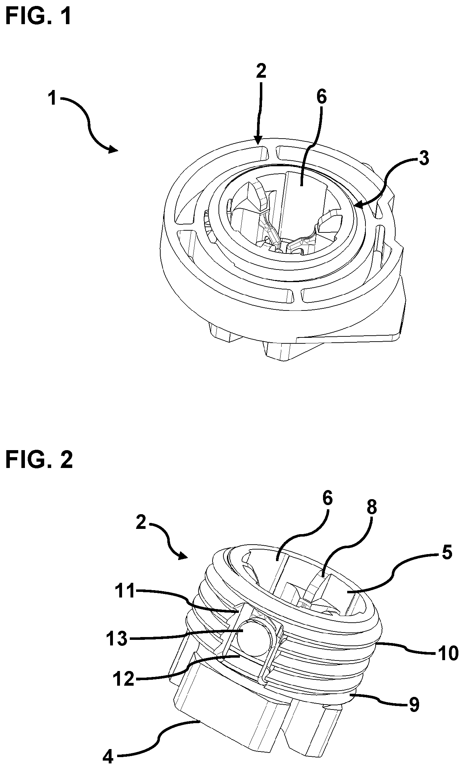

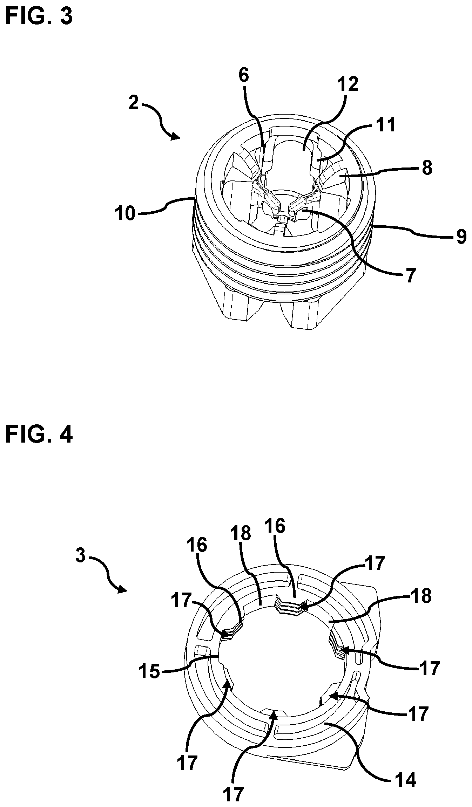

Figure 1 shows a perspective view of an advantageous fastener, figure 2 shows a perspective side view of an embodiment of the inner part and figure 3 shows a perspective plan view of an embodiment of the inner part. The fastener 1 comprises an inner part 2 and an outer part 3, which are connected to each other in figure 1.

The inner part 2 is designed in the form of a hollow cylinder or tube, as shown. The inner part 2 comprises a first end 4 and a second end 5. A receptacle 6 extends along the longitudinal axis of the inner part 2 in its interior. In the receptacle 6, locking fingers 7 project radially from an inner surface of the receptacle 6 towards the center axis of the inner part 2. A retaining element, e.g. a stud, can be added to the first end 4 in the receptacle 6.

In the receptacle 6, near the second end 5, there are arranged engagement elements 8, which may be in the form of ramps, recesses, edges, cams, etc., without being limited to these. In the present embodiment, the engagement elements 8 are adapted as pins that project radially from the inner surface of the receptacle 6.

On its lateral surface 9, the inner part 2 comprises an external thread 10 which, in the embodiment shown, extends over almost the entire length of the lateral surface 9. Specifications of the external thread 10, in particular thread turns, etc., can be designed according to the application and need. The external thread 10 is interrupted by an aperture 11 that passes through the wall of the inner part 2. A locking element 12 is arranged in the aperture 11. A first end of the locking element 12 is fixed to the wall of the inner part 2, wherein the locking element 12 extends axially to the longitudinal axis of the inner part 2 up to its second free end. A spherical segment-shaped abutment element 13 is present at the free end. The locking element 12 is manufactured in one piece with the inner part 2, preferably from plastic. The locking element 12, or more precisely its free end, is designed to be radially resilient and in particular projects beyond the outer surface 9 and, preferably, beyond the external thread 10. It is also possible to provide several locking elements 12.

Figure 4 shows a perspective view of an embodiment of an outer part 3. The outer part 3 is designed to be sleeve-shaped or ring-shaped in the embodiment shown. On its upper side, it comprises fastening elements 14 for fastening structural components, such as a door panel or parts thereof. The fastening elements14 are designed, for example, as recesses or circumferential notches into which corresponding connection partners can be inserted. On its inner surface 15, engaging elements 16 are provided, which are present in several engaging arrangements 17. Each engaging arrangement 17 includes a plurality of axially spaced engaging elements 16, one above the other. The engaging arrangements 17 are arranged at intervals around the peripheral surface of the inner surface 15, so that recesses 18 are present between the engaging arrangements 17. The recesses 18 can also be designed, for example, as apertures or notches in the wall of the outer part 3. The engaging elements 16 can be disk-shaped, circular, plate-shaped or the like and project radially towards the center axis of the outer part 3. The engaging elements 16 of a plurality of engaging arrangements 17 are preferably located in a plane that is oriented in particular transversely to the longitudinal axis of the outer part 3.

As can be clearly seen in figure 1, the sleeve-shaped outer part 3 can be inserted with its engaging elements 16 into the external thread 10 of the inner part 2, so that the inner part 2 relative to the outer part 3 or the outer part 3 relative to the inner part 2 can be guided axially and helically along the circumferential surface of the respective part 2, 3. As soon as the locking element 12 engages in the respective recess 18, the connection is secured by a form fit. The rotary movement can be continued by applying sufficient torque, in that the engaging elements 16 adjoining the recess 18 prestress the locking element 12, in particular its radially resiliently designed free end, radially in the direction of the center axis of the inner part 2 against a spring force of the locking element 12. Depending on the design of the distances between the engaging arrangements 17 or the recesses 18, it is possible to finely adjust the height, that is to say the axial displacement of the two parts 2, 3 relative to one another.

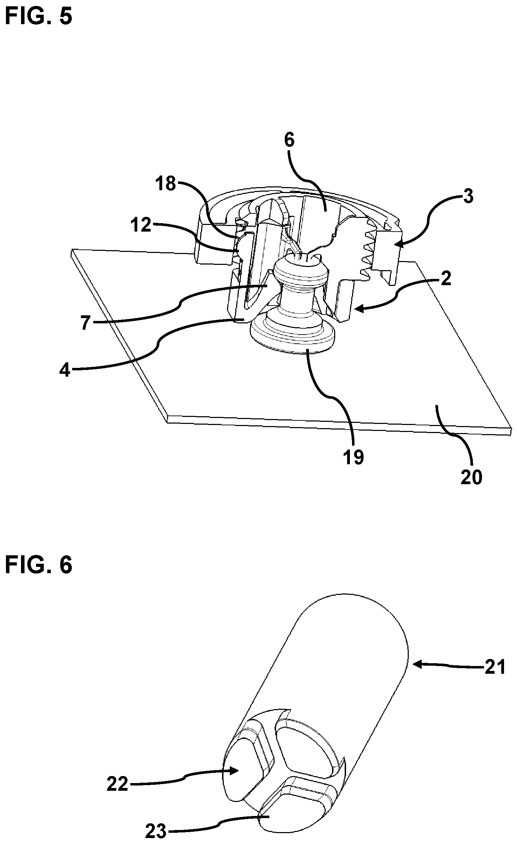

Figure 5 shows a sectional view of a fastener on a holding device. A holding element 19, e.g. a stud, can be inserted into the receptacle 6 via the first end of the fastener 1. Of course, the inner part 2 can also be slipped over the holding element 19. The holding element 19 can be installed on an indicated supporting structure 20, e.g. a body panel of a motor vehicle. The locking fingers 7 in the receptacle 6 interact with the holding element 19 and lock with corresponding locking surfaces on the holding element 19. Additional means may be provided to prevent axial movement of the inner part 2 along its longitudinal axis.

After the inner part 2 has been placed on the holding element 19, the outer part 3 can be connected to the inner part 2 as previously explained. The sectional view clearly shows the axial guide being locked by the locking element 12. The form fit between the locking element 12 and the recess 18 locks the parts 2, 3 together and movement of the parts 2, 3 relative to each other is only possible by applying a torque.

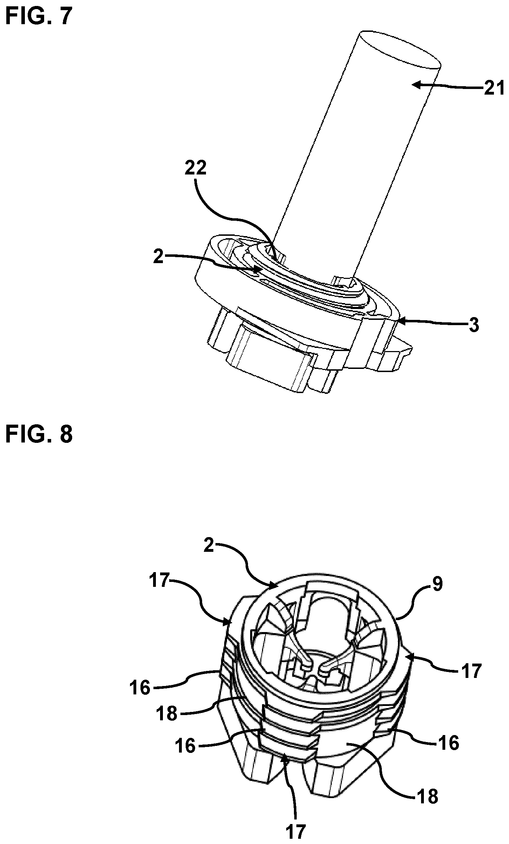

Figure 6 shows a perspective view of a tool and figure 7 shows a perspective view of an advantageous arrangement with a tool and a fastener. Tool 21 is shown as an example in figure 6. For the rest, reference is made to Figures 1 through 6. The tool 21 comprises a free end that can be arranged, for example, on a tool holder or the like. The free end comprises a gripping element 22 that is designed in the form of three cams 23 or circular segments that are separated from one another by notches. The gripping element 22 is designed so that it can be inserted into the second end 5 of the inner part 2, which is opposite the first end 4, and can be engaged there with the engagement elements 8 in the receptacle 6 of the inner part 2. This connection allows a torque of the tool 21 to be transmitted to the inner part 2, whereby the inner part 2 can be twisted relative to the outer part 3. Advantageously, the engagement elements 8 and the gripping element 22 are designed to be form-fitting to one another, so that a precise and reliable transmission of force is ensured.

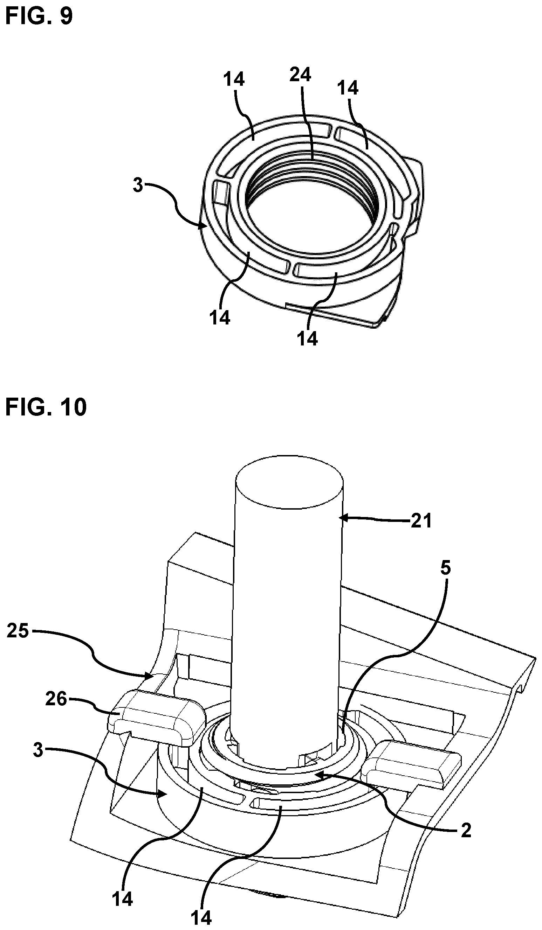

Another embodiment is shown in figure 8 and figure 9. Figure 8 shows a perspective side view of an embodiment of the inner part having engaging element on its outer surface and figure 9 shows a perspective side view of an embodiment of the outer part with an internal thread. In this embodiment, the outer part 3 comprises an internal thread 24 on its inner surface 15. Fastening elements 14 are also provided for the reversible fastening of a structural component. On the other hand, the inner part 2 includes engaging elements 16 arranged on the outer surface 9 of the inner part 2. Engaging elements 16 that are spaced apart axially from one another can be arranged in engaging arrangements 17, as previously explained. Between the engaging elements 16 that are spaced apart from one another in the peripheral direction or the engaging arrangements 17, there is at least one recess 18 that is provided for engagement with a locking element that is not shown. The locking element is preferably arranged on the outer part 3 and in particular projects in the direction of the center axis of the outer part 3. The locking element engages in the recesses 18. The inner part 2 can be guided axially and helically relative to the outer part 3 or the outer part 3 can be guided axially and helically relative to the inner part 2 until the locking element engages in the recess 18 and the parts 2, 3 are secured against unintentional twisting and loosening. In all other respects, reference is made to the explanations and reference signs for the further figures.

Figure 10 shows a perspective view of a preferred system with a tool inserted into the inner part. An embodiment of the system for attaching a structural component 25 to a carrier structure not shown, using a fastener 1 with an outer part 3 and an inner part 2. The outer part 3 is connected to a structural component 25 in a torque-transmitting manner, while the inner part 2 is connected to the carrier structure via a retaining element. Connecting partners 26, such as clips, latching or quick-release elements or the like, can be used to establish a connection between structural component 25 and outer part 3. The connecting partners can be a fixed component of structural component 25 or can be reversibly connected to it. The connecting partners 26 engage in the fasteners 14 on the outer part 3.

The outer part 3 is of a tubular design and engages around the inner part 2. A threaded connection is adapted between the two parts, wherein one part 2, 3 has a thread and the other part 2, 3 has a corresponding engaging element, as described before. A helical axial adjustment is possible by relative rotation between the inner part 2 and outer part 3. To fix the set position, parts 2, 3 comprise a radially spring-loaded locking element that can engage in a recess located between the engaging elements.

A tool 21, which is equipped with a gripping element at the free end, is provided for height adjustment. The tool 21 is inserted into a second end 5 of the inner part 2, which is located opposite the opening to the retaining element. The gripping element engages with engagement elements inside the receptacle, whereby a rotational movement can be transmitted to the inner part 2 by turning the tool 21. This enables a targeted axial displacement of the inner part 2 relative to the outer part 3 to adjust the desired position of the structural component 25 relative to the carrier structure.

## Claims

1. Fastener (1) for attaching a structural component (20) to a carrier structure, comprising an inner part (2) and an outer part (3), wherein
the inner part (2) comprises a receptacle (6) along a longitudinal axis for reversibly receiving a holding element (19) via a first end (4) of the inner part (2), wherein the inner part (2) comprises an external thread (10) on its outer surface (9), at least partially, wherein the inner part (2) comprises at least one radially resiliently mounted locking element (12), which is located at least in sections in the area of the external thread (10) and at least partially projects radially beyond the outer surface (9) of the inner part (2),
and wherein the outer part (3) is designed to be sleeve-shaped and comprises on its inner surface (15) at least one engaging element (16) projecting radially to the center axis of the outer part (3) and at least one recess (18),
wherein the engaging element (16) is adapted for engagement with the external thread (10) of the inner part (2), so that the inner part (2) can be guided axially and helically relative to the outer part (3) or the outer part (3) can be guided axially and helically relative to the inner part (2) until the locking element (12) engages in the recess (18) and the parts (2, 3) are secured against unintentional twisting and loosening.

2. Fastener (1) for attaching a structural component (20) to a carrier structure, comprising an inner part (2) and an outer part (3), wherein
the inner part (2) comprises a receptacle (6) along a longitudinal axis for reversibly receiving a holding element (19) via a first end (4) of the inner part (2), wherein the inner part (2) comprises on its outer surface (9) at least one engaging element (16) projecting radially away from the center axis of the inner part (2) and at least one recess (18),
and wherein the outer part (3) is sleeve-shaped and comprises at least partially an internal thread (24), wherein the outer part comprises at least one radially resiliently mounted locking element (12), which is located at least in sections in the area of the internal thread (24) and at least partially projects radially beyond the inner surface (15) of the outer part (3),
wherein the engaging element (16) is adapted for engagement with the internal thread (24) of the outer part (3), so that the inner part (2) can be guided axially and helically relative to the outer part (3) or the outer part (3) can be guided axially and helically relative to the inner part (2) until the locking element (12) engages in the recess (18) and the parts (2, 3) are secured against unintentional twisting and loosening.

3. Fastener (1) according to claim 1 or 2, **characterized in that** the at least one locking element (12) is arranged in an aperture (11) in a wall of the outer part (3) or inner part (2).

4. Fastener (1) according to one of the preceding claims, **characterized in that** the locking element (12) comprises a fixed end and a radially resilient free end that is adapted to engage in the recess (18).

5. Fastener (1) according to claim 4, **characterized in that** the free end of the locking element (12) comprises an abutment element (13) in the shape of a segment of a sphere.

6. Fastener (1) according to one of the preceding claims, **characterized in that** a plurality of locking elements (12) are present.

7. Fastener (1) according to one of the preceding claims, **characterized in that** the at least one engaging element (16) is adapted in the shape of a segment of a circle in the peripheral direction of the outer surface (9) of the inner part (2) or of the inner surface (15) of the outer part (3).

8. Fastener (1) according to one of the preceding claims, **characterized in that** a plurality of engaging elements (16) are provided, which are spaced apart axially with respect to the longitudinal axis of the inner part (2) or outer part (3).

9. Fastener (1) according to claim 8, **characterized in that** a plurality of axially spaced-apart engaging elements (16) form an engaging arrangement (17), wherein a plurality of engaging arrangements (17) are spaced apart from one another in the circumferential direction along the inner surface (15) of the outer part (3) or the outer surface (9) of the inner part (2).

10. Fastener (1) according to claim 9, **characterized in that** recesses (18) are present between the engaging arrangements (17).

11. Fastener (1) according to one of the preceding claims, **characterized in that** the outer part (3) comprises fastening elements (14) for fastening a structural component.

12. Fastener (1) according to one of the preceding claims, **characterized in that** retaining elements (7) are present in the receptacle (6) of the inner part (2), which serve to hold the holding element (19) and project radially resiliently into the receptacle (6).

13. Fastener (1) according to one of the preceding claims, **characterized in that** the receptacle (6) of the inner part (2) contains engagement elements (8) for a tool (21) by means of which the inner part (2) can be rotated with respect to the outer part (3).

14. System for attaching a structural component (25) to a carrier structure (20), comprising a fastener (1) having an inner part (2) and an outer part (3), wherein the structural component (25) is reversibly attached to the outer part (3) and the carrier structure (20) is reversibly attached to the inner part (2),
wherein the inner part (2) comprises a receptacle (6) along a longitudinal axis for reversibly receiving a holding element (19) connected to the carrier structure (20) via a first end (4) of the inner part (2), wherein the holding element (19) is held in the receptacle (6),
wherein the structural component (25) is held on the outer part (3) in a torque-transmitting manner,
wherein either the inner part (2) comprises an external thread (10) on its outer surface (9) and the outer part (3) comprises on its inner surface (15) at least one engaging element (16) that extends radially to the center axis and is adapted for engagement with the external thread (10),
or the outer part (3) comprises an internal thread (24) and the inner part (2) comprises on its outer surface (9) at least one engaging element (16) that extends radially away from the center axis and is adapted for engagement with the internal thread (24),
wherein either the inner part (2) or the outer part (3) comprises at least one radially resiliently mounted locking element (12), which is located at least in sections in the area of the respective thread (10, 24) and at least partially projects radially beyond the outer surface (9) or the inner surface (15) of the associated part (2, 3),
and wherein the other part (2, 3) comprises at least one recess (18),
so that one part (2, 3) can be guided axially and helically relative to the other part (2, 3) and a distance between the structural component (25) and the carrier structure (20) can be adjusted, until the locking element (12) engages in the recess (18) and unintentional relative movement between the inner part (2) and the outer part (3) is prevented.

15. Method for positioning and securing a structural component relative to a support structure (20) using a fastener (1) comprising an inner part (2) and an outer part (3), wherein the outer part (3) is connected to the structural component (25) and the inner part (2) is connected to the support structure (20),
wherein
- a holding element (19) connected to the carrier structure (20) is inserted into a receptacle (6) of the inner part (2) along a longitudinal axis and held in place in the receptacle (6),
- the outer part (3) is rotated relative to the inner part (2), or the inner part (2) is rotated relative to the outer part (3), in a screw-like motion along a threaded connection (10)
- a distance between the structural component and the support structure (20) is adjusted by said relative screw-like movement,
- upon reaching a desired position, at least one resiliently supported locking element (12), arranged on either the inner part (2) or the outer part (3), engages in a corresponding recess (18) provided on the respective other part (2, 3),
- whereby the adjusted position of the structural component (25) relative to the support structure (20) is form-fittingly locked, and unintentional relative movement between the inner part (2) and the outer part (3) is prevented.
